# EUROPÄISCHE PATENTSCHRIFT

(11) **EP 1 195 673 B1**
(45) Veröffentlichungstag und Bekanntmachung des Hinweises auf die Patenterteilung: **09.05.2007**
(21) Anmeldenummer: 00121643.1
(22) Anmeldetag: 04.10.2000
(51) Int. Cl.: G06F 3/048

(54) **Kraftfahrzeug-Multimediasystem mit animierter Anzeigefunktion**
Automotive multimedia system with animated display function
Système multimédia pour un vehicule avec fonction d'affichage animé

(43) Veröffentlichungstag der Anmeldung: 10.04.2002
(73) Patentinhaber: SIEMENS AKTIENGESELLSCHAFT, 80333 München (DE)
(72) Erfinder: van Os, Marcel, 5021 LE Tilburg (NL); Verbeek, Peter, 78860 St Nom la Breteche (FR)

(56) Entgegenhaltungen:
- WO-A-00/17740
- WO-A-99/35008
- DE-A- 19 847 610
- US-A- 5 539 429
- US-A- 5 847 704

## Beschreibung

Die Erfindung betrifft ein Kraftfahrzeug-Multimediasystem mit einer von einer Steuereinheit angesteuerten Anzeigevorrichtung und einer Auswahlvorrichtung für auf der Anzeigevorrichtung dargestellte erste Auswahlfelder, wobei über die Auswahl eines Auswahlfeldes mittels der Auswahlvorrichtung ein mit dem ausgewählten Auswahlfeld verknüpftes Untermenü aufgerufen wird. Weiterhin betrifft die Erfindung ein Verfahren zur Anordnung von Auswahlfeldern auf einer Anzeigevorrichtung eines Kraftfahrzeug-Multimediasystems.

In Kraftfahrzeugen werden neben dem altbekannten Autoradio in zunehmendem Maße weitere Unterhaltungsangebote und Kommunikationsfunktionen zur Verfügung gestellt. Hierbei werden insbesondere mehrere Funktionen in einem einzelnen Multimediasystem angeordnet. Ein solches Multimediasystem weist in der Regel eine zentrale Steuereinrichtung auf, die mit einer Anzeigevorrichtung und einer Bedienvorrichtung sowie den unterschiedlichen Funktionsmodulen verknüpft ist. Bei den Funktionen, die ein solches Kraftfahrzeug-Multimediasystem beinhalten kann, kann es sich beispielsweise um die Funktionen eines Autoradios, eines CD-Spielers, eines CD-Wechslers, eines Navigationssystems, eines Telefons und eines Internetzuganges handeln. Durch die Vielzahl der ausführbaren Funktionen ist insbesondere eine benutzerfreundliche Bedienung des Multimediasystems bei Kraftfahrzeuganwendungen von besonderer Bedeutung.

Aus der WO 99/35008 ist eine graphische Benutzeroberfläche für die Verwendung in Kraftfahrzeugen bekannt. Bei dieser Benutzeroberfläche werden die verschiedenen, zur Auswahl stehenden Funktionen auf einer Anzeigevorrichtung durch Symbole repräsentiert, die häufig auch als "Icons" bezeichnet werden. Die Auswahl eines bestimmten Icons erfolgt hierbei durch das sogenannte "Scrollen" oder Rollen, wodurch die Icons insgesamt auf der Anzeigevorrichtung nach einer Richtung, in diesem Fall nach links oder rechts, am Betrachter vorbei geführt werden und jeweils nur ein Teil der Icons sichtbar ist. Gemäß der WO 99/35008 ist eine ausgewählte Bildschirmposition zur Aktivierung einer mit einem Icon verknüpften Funktion vorgesehen. Nach einer solchen Aktivierung können entsprechende Einstellungen zu dieser Funktion vorgenommen werden. Nachteilig bei dieser Ausführungsform ist insbesondere, dass die Icons nach Auswahl einer Funktion von der Anzeigevorrichtung verschwinden, so dass die Auswahl einer neuen Funktion durch Auswahl eines neuen Icons erst eine Rückkehr in das Hauptmenü erforderlich macht.

Aus der US 5,847,704 ist eine weitere Anzeigevorrichtung für Kraftfahrzeuge bekannt, auf der unterschiedliche Darstellungen erfolgen können. Die Auswahl einzelner Funktionen erfolgt bei dem dort beschriebenen System jedoch nicht durch die Auswahl von Icons oder dergleichen auf der Anzeigevorrichtung sondern durch separate Bedienknöpfe. Jeder Funktion des Systems ist ein solcher Bedienknopf zugeordnet. Hierdurch erfordert das System eine Vielzahl von Bedienknöpfen. Auf der Anzeigevorrichtung selbst können unterschiedliche Informationen dargestellt werden, wobei zwischen Informationen, die für das Führen des Fahrzeuges erforderlich sind, und Zusatzinformationen bzw. Zusatzfunktionen unterschieden wird. Zu den erstgenannten gehört beispielsweise die Anzeige der Geschwindigkeit, während zu den Zusatzfunktionen die Klimatisierung oder eine Telefonfunktion gerechnet werden. Die Geschwindigkeit und dergleichen soll unabhängig von der Anzeige zusätzlicher Informationen stets angezeigt werden. Wird daher über die Bedienknöpfe die Anzeige von Zusatzfunktionen ausgewählt, so wird die Anzeige der Geschwindigkeit in den Randbereich der Anzeigevorrichtung verschoben und in einer gedrehten Form angezeigt. Auf diese Weise wird Darstellungsraum für die Anzeige der Zusatzfunktionen im zentralen Bereich der Anzeigevorrichtung gewonnen. Nachteilig ist bei dieser Ausführungsform, dass eine Vielzahl von Bedienknöpfen erforderlich ist. Weiterhin finden sich keine Angaben wie der Wechsel in der Anzeigendarstellung benutzerfreundlich erfolgen kann.

Aus der WO 00/17740 ist weiterhin ein Verfahren zur Darstellung von graphischen Bedienelementen einer graphischen Benutzeroberfläche bekannt. Hierbei werden nach Auswahl eines Icons die vorhandenen Icons in ihrer Größe und Anordnung zueinander verändert und weitere Icons eines Untermenüs erzeugt.

Aufgabe der Erfindung ist es, ein Kraftfahrzeug-Multimediasystem bzw. ein Verfahren mit einer benutzerfreundlichen Anzeigedarstellung anzugeben, insbesondere beim Aufruf von Untermenüs, wobei insbesondere ein schneller Wechsel zu einer neuen Funktion sichergestellt werden soll.

Die Aufgabe wird durch ein Kraftfahrzeug-Multimediasystem bzw. ein Verfahren mit den Merkmalen des jeweiligen unabhängigen Anspruchs gelöst.

Durch Betätigen der Auswahlvorrichtung ist ein Sprung zwischen den ersten Auswahlfeldem hervorrufbar. Nach Auswahl eines Auswahlfeldes erfolgt die Ansteuerung der Anzeigevorrichtung durch die Steuereinheit in Form einer auf der Anzeigeeinheit ablaufenden Animation, wobei zur Schaffung von Darstellungsraum für die Darstellung von weiteren Auswahlfeldern für ein Untermenü des ausgewählten Auswahlfeldes unter Beibehaltung der Anordnung der ersten Auswahlfelder untereinander die Größe und / oder Position zumindest einiger der angezeigten ersten Auswahlfelder derart verändert wird, dass der Eindruck einer kontinuierlichen Bewegung entsteht und die Auswahlfelder des Untermenüs in einer Animation auf der Anzeigevorrichtung erzeugt werden.

Der Übergang zwischen verschiedenen Darstellungen auf der Anzeigevorrichtung nach Auswahl einer bestimmten Funktion erfolgt daher nicht abrupt, sondern durch die Animation in einer Sequenz von Bildern, die für den Benutzer eine ablaufende Bewegung ergeben. Hierbei werden sowohl die Größe und / oder Position zumindest einiger der ersten Auswahlfelder durch eine Animation kontinuierlich verändert als auch die zusätzlichen Auswahlfelder des Untermenüs kontinuierlich durch eine Animation auf dem Bildschirm erzeugt. Die Anzeigevorrichtung wird hierzu in entsprechender, an sich bekannter Weise durch die Steuereinheit angesteuert, wobei beispielsweise durch die Steuereinheit eine Folge von Bildern erzeugt wird. Als Bestandteil der Animation der neu anzuzeigenden Untermenüs kann insbesondere die Helligkeit der im Untermenü anzuzeigenden Darstellungen über einen vorgegebenen Zeitraum kontinuierlich erhöht werden.

Vorzugsweise enthalten zumindest einige der Auswahlfelder Symbole in einer dreidimensionalen (3D) Darstellung zur Kennzeichnung der Auswahlfelder. Durch diese Symbole, die häufig auch als Icons bezeichnet werden, soll dem Benutzer insbesondere eine intuitive Benutzung des Gesamtsystems dadurch erleichtert werden, dass die Symbole die mit dem Auswahlfeld verknüpfte Funktion verdeutlichen. Die dreidimensionalen Symbole können während der Animation insbesondere in eine Drehbewegung versetzt werden, wodurch sich eine veränderliche Ansicht des Betrachters auf das 3D-Symbol ergibt. Dieser Eindruck wird ebenfalls durch eine Abfolge verschiedener Ansichten der 3D-Symbole erzeugt, die von der Steuereinheit an die Anzeigevorrichtung weitergegeben werden.

In einer besonderen Ausführungsform ist vorgesehen, dass die nicht ausgewählten ersten Auswahlfelder durch das ausgewählte Auswahlfeld aus einem Darstellungsbereich der Anzeigevorrichtung verdrängt werden. Hierdurch wird ein sanfter Übergang zwischen der Darstellung der ersten Auswahlfelder und der Darstellung von Untermenüs eines ausgewählten Auswahlfeldes erreicht. Diese Darstellungsweise ist besonders dann geeignet, wenn für die Darstellung des Untermenüs des ausgewählten Auswahlfeldes ein großer Darstellungsbereich benötigt wird. Dies kann insbesondere dadurch erfolgen, dass das ausgewählte Auswahlfeld in einer ersten Phase der Animation zunächst vergrößert wird, um die nicht ausgewählten Auswahlfelder aus dem Darstellungsbereich des Bildschirms zu verdrängen, und in einer zweiten Phase der Animation verkleinert wird, um den Darstellungsraum für die Darstellung der Auswahlfelder des Untermenüs zu schaffen.

In einer anderen Ausführungsform ist vorgesehen, dass die Animation derart erfolgt, dass die Größe der nicht ausgewählten ersten Auswahlfelder verringert wird, wobei die Auswahlfelder jedoch weiterhin über die Auswahlvorrichtung auswählbar bleiben. Bei dieser Ausführungsform wird durch eine Verringerung der Größe der nicht ausgewählten ersten Auswahlfelder und eine Veränderung deren Position ebenfalls der entsprechende Darstellungsraum auf der Anzeigevorrichtung geschaffen. Im Gegensatz zu der vorher beschriebenen Ausführungsform bleiben die nicht ausgewählten Auswahlfelder allerdings weiterhin sichtbar und damit auch auswählbar. Diese Ausgestaltung hat den besonderen Vorteil, dass die Auswahl eines neuen Auswahlfeldes besonders einfach möglich ist, da stets alle ersten Auswahlfelder auswählbar bleiben.

Kombinationen der genannten Ausführungsformen sind möglich. So kann ein Teil der Auswahlfelder durch das ausgewählte Auswahlfeld von der Anzeigevorrichtung verdrängt werden, während die restlichen Anzeigefelder in ihrer Größe und Position verändert werden, jedoch sichtbar und auswählbar bleiben.

In einer speziellen Ausgestaltung der Erfindung ist vorgesehen, dass das Symbol eines oder mehrerer Auswahlfelder durch die Animation ausgeblendet wird. Um den nötigen Darstellungsraum für die Untermenüs zu schaffen, wird, wie zuvor beschrieben, die Größe der ersten Auswahlfelder verringert. Daher kann es vorkommen, dass das Symbol zur Kennzeichnung des Auswahlfeldes bis zur Unkenntlichkeit verkleinert wird. Um dies zu vermeiden wird erfindungsgemäß das Symbol durch die Animation ausgeblendet. Dies bedeutet, dass auch die Ausblendung des Symbols durch eine Sequenz von Bildabfolgen erfolgt. Zur Kennzeichnung des Auswahlfeldes bleibt dann beispielsweise nur eine alphanumerische Anzeige bestehen.

In einer weiteren speziellen Ausgestaltung der Erfindung ist vorgesehen, dass durch die Animation eine kontinuierliche Farbänderung zumindest eines Auswahlfeldes erfolgt. Hierbei können insbesondere nicht ausgewählte Auswahlfelder kontinuierlich farblich so verändert werden, dass sie in den Hintergrund treten, jedoch weiterhin sichtbar und auswählbar bleiben.

Die Auswahlvorrichtung kann sowohl separat von der Anzeigevorrichtung ausgebildet sein als auch in diese integriert sein. In letzterem Falle kann es sich dabei insbesondere um einen berührungsempfindlichen Bildschirm ("touch screen") handeln. Das erfindungsgemäße Multimediasystem kann bereits herstellerseitig in das Kraftfahrzeug eingebaut sein, insbesondere jedoch auch zum nachträglichen Einbau in das Kraftfahrzeug bestimmt sein und beispielsweise die Größe und Form üblicher Autoradios aufweisen.

Das Multimediasystem kann auch Bestandteil eines übergeordneten Kraftfahrzeugsystem, beispielsweise eines Bordcomputers, sein. Ein solcher Bordcomputer übernimmt zusätzliche, über das Multimediasystem hinausgehende Funktionen, wie beispielsweise die Heizungs- und Klimaregelung. In diesem Fall werden auf der gemeinsamen Anzeigevorrichtung insbesondere auch Auswahlfelder für die über das Multimediasystem hinausgehenden Funktionen dargestellt. Diese zusätzlichen Auswahlfelder können in die beschriebene Animation mit einbezogen werden.

Bei einem Verfahren zur Anordnung von Auswahlfeldem auf einer Anzeigevorrichtung eines Kraftfahrzeug-Multimediasystems wird
- eines von mehreren Auswahlfeldern ausgewählt,
- eine Animationsphase gestartet,
- während der Animationsphase die Größe und / oder Position zumindest einiger der angezeigten Auswahlfelder kontinuierlich verändert, um Darstellungsraum für die Darstellung von weiteren Auswahlfeldern für ein Untermenü des ausgewählten Auswahlfeldes zu schaffen, wobei die Anordnung der ersten Auswahlfelder untereinander beibehalten wird, und
- die Auswahlfelder des Untermenüs werden in einer Animation auf der Anzeigevorrichtung erzeugt. Durch Betätigen der Auswahlvorrichtung erfolgt dabei ein Sprung zu einem auszuwählenden Auswahlfeld.

Die Erfindung wird nachfolgend anhand von Ausführungsbeispielen und der Zeichnung näher erläutert. Es zeigen:
- Fig. 1: ein Blockschaltbild eines Multimediasystems,
- Fig. 2: eine Bildsequenz einer ersten Animation,
- Fig. 3: eine Bildsequenz einer zweiten Animation

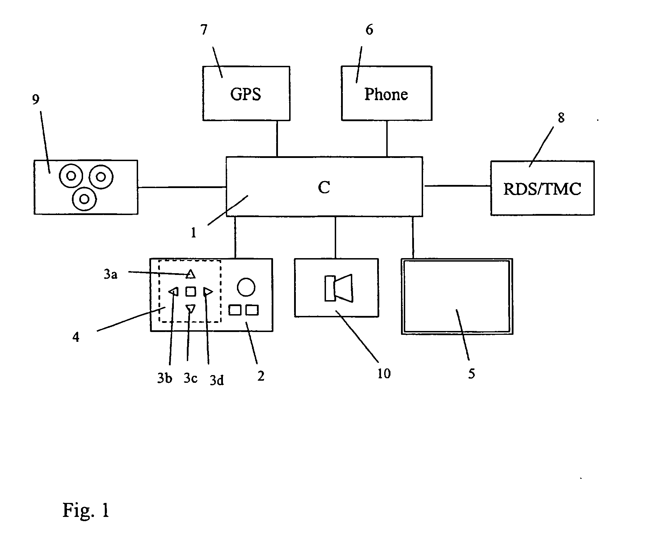

Figur 1 zeigt ein Blockschaltbild eines Kraftfahrzeug-Multimediasystems. Zentraler Bestandteil des Systems ist die Steuereinheit 1. Die Steuereinheit 1 enthält beispielsweise einen Mikroprozessor und die dazugehörigen Speicherelemente und übernimmt die Steuerung der angeschlossenen Module über ein entsprechendes Programm. Mit der Steuereinheit 1 ist eine Bedieneinheit 2 verbunden, die in Form der Richtungspfeile 3 eine Auswahlvorrichtung 4 für Auswahlfelder enthält, die auf der Anzeigevorrichtung 5 angezeigt werden. Die Auswahlvorrichtung kann in alternativen Ausführungsformen beispielsweise auch als Joystick oder Spracheingabesystem ausgebildet sein. Mit der zentralen Steuereinheit 1 sind ferner ein Telefonmodul 6, ein Navigationsmodul 7, ein Radiomodul 8 und ein CD-Spielermodul 9 verbunden.

Über das Telefonmodul 6 wird durch das Multimediasystem eine Freisprecheinrichtung für ein internes oder externes Mobiltelefon zur Verfügung gestellt. Mittels des Navigationsmoduls 7 ist eine Bestimmung der Fahrzeugposition, eine Routenberechnung und die Ausgabe von Zielführungshinweisen möglich. Entsprechende Navigationssysteme sind hinlänglich bekannt und werden in Kraftfahrzeugen eingesetzt. Das Radiomodul 8 stellt die bekannten Funktionen eines Autoradios zur Verfügung. Mittels des CD-Abspielmoduls 9 kann eine Audio-CD abgespielt werden, wobei die Ausgabe über die Lautsprecher 10 erfolgt. Weiterhin können über das CD-Abspielmodul 9 kartographische Daten von einer entsprechenden Karten-CD ROM für das Navigationsmodul 7 ausgelesen werden. Die Bedienung des Systems erfolgt über die Bedieneinheit 2, wobei insbesondere auf der Anzeigevorrichtung 5 dargestellte Auswahlfelder für die verschiedenen Funktionen des Multimediasystems über die Auswahlvorrichtung 4 der Bedieneinheit 2 auswählbar sind.

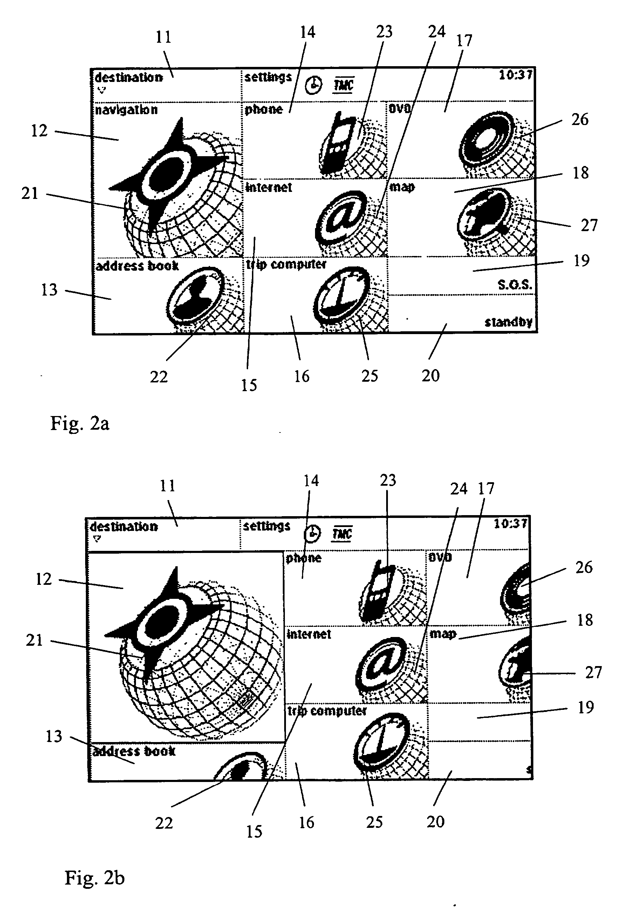

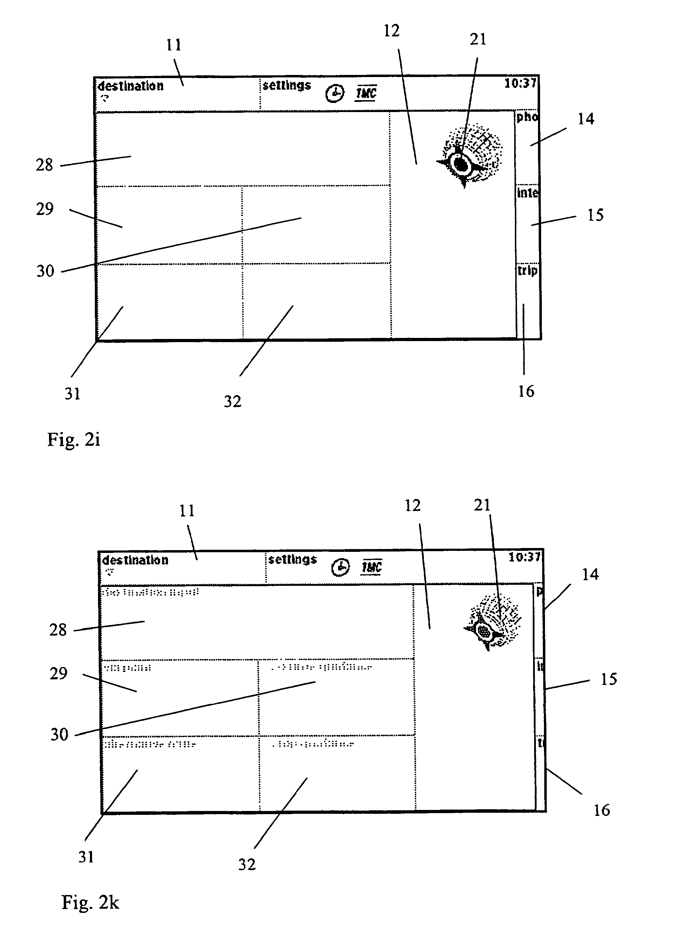

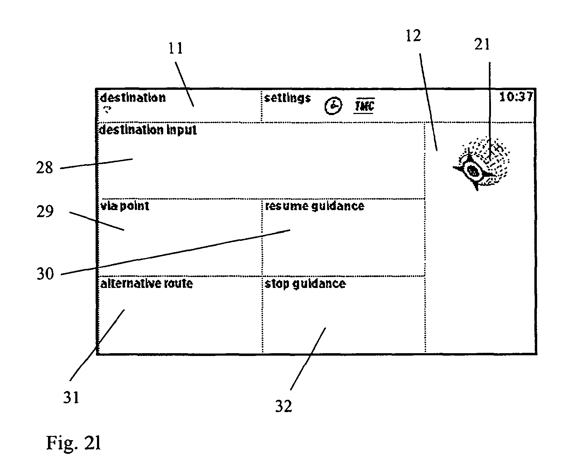

Figur 2a zeigt beispielhaft eine erste Bildschirmdarstellung der Anzeigevorrichtung 5. Hierbei werden verschiedene Auswahlfelder 11 bis 20 dargestellt. Nach Auswahl des Auswahlfeldes 11 lässt sich ein Zielort für die Fahrzeugzielführung eingeben oder auswählen. Durch Auswählen des Auswahlfeldes 12 wird ein Untermenü zu Navigationsfunktionen aufgerufen. Das Auswahlfeld 13 erlaubt den Aufruf eines Untermenüs für ein Adressbuch. Mittels des Auswahlfeldes 14 wird die Telefonfunktion aktiviert. Durch das Auswahlfeld 15 werden die nötigen Schritte zur Herstellung eines Internetzuganges eingeleitet. Mittels des Auswahlfeldes 16 können Fahrinformationen abgerufen werden. Das Auswahlfeld 17 startet die Wiedergabe einer CD oder DVD. Über das Auswahlfeld 18 kann eine Kartendarstellung mit Landkartendaten abgerufen werden. Mittels des Auswahlfeldes 19 wird eine SOS-Funktion aktiviert und mit dem Auswahlfeld 20 in einen Bereitschaftsbetrieb ("standby") geschaltet.

Einige der Auswahlfelder 11 bis 20 weisen zudem Symbole 21 bis 27 in 3D-Darstellung auf, durch die dem Fahrer intuitiv die Funktion des jeweiligen Auswahlfeldes vermittelt wird.

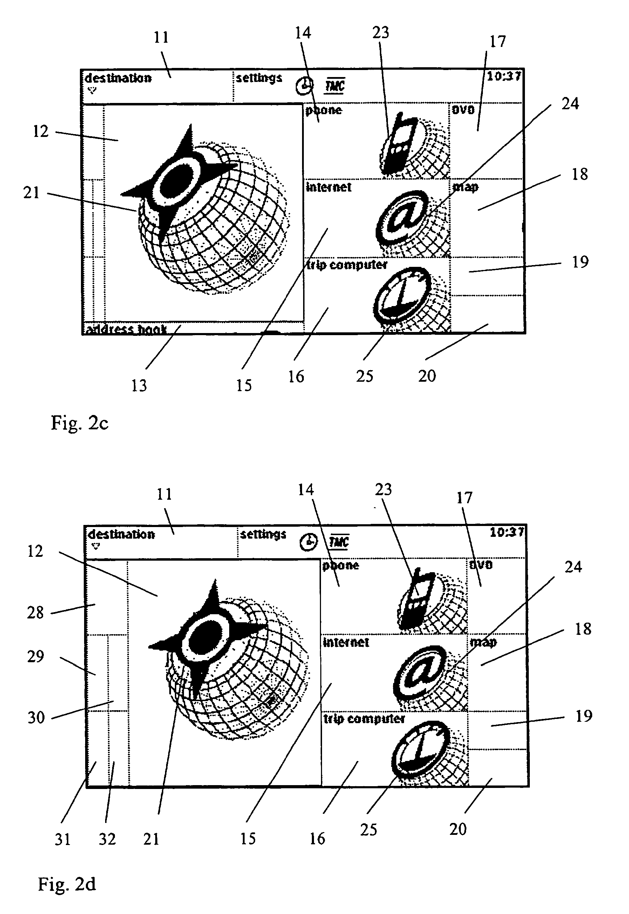

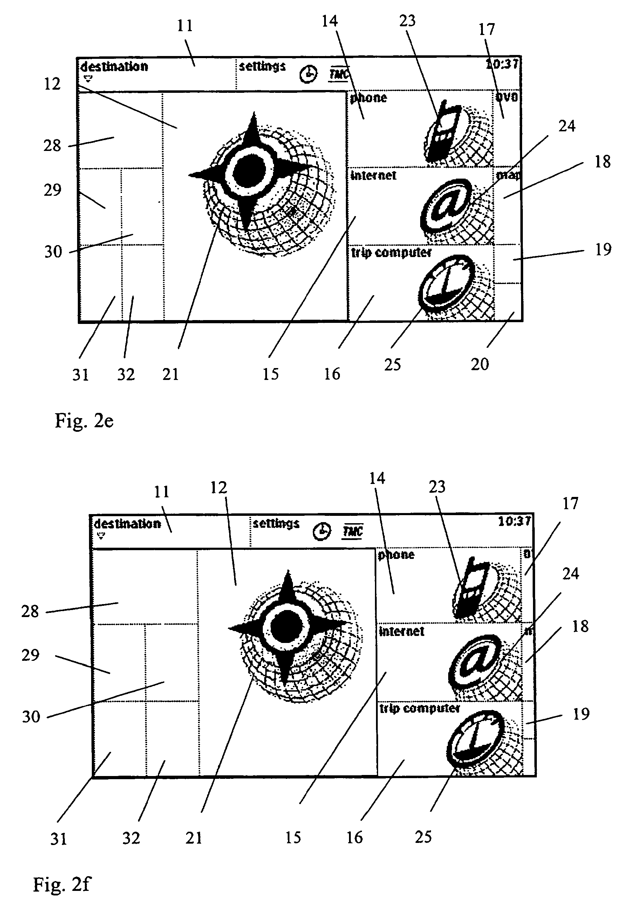

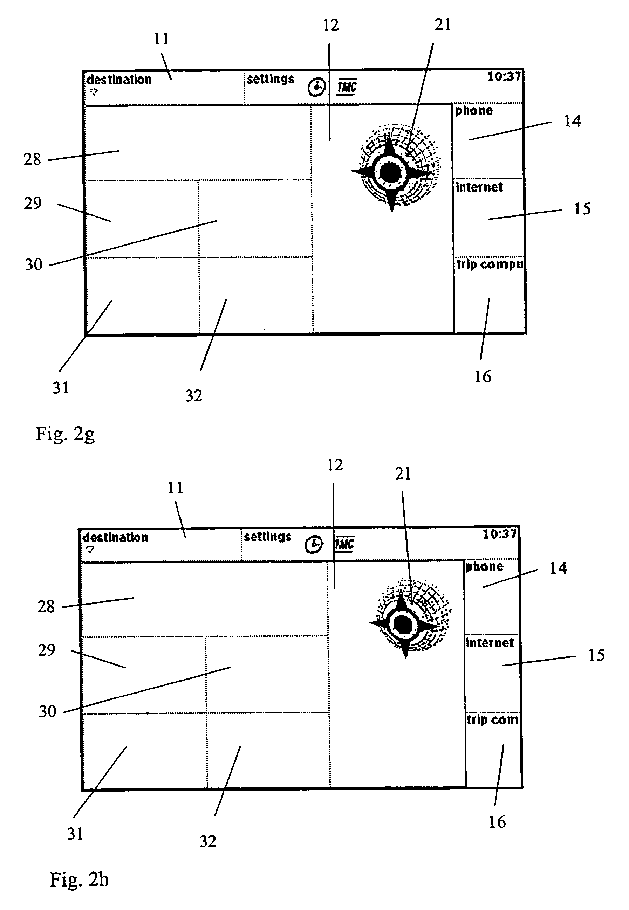

Über die Richtungstasten 3 der Auswahlvorrichtung 4 kann eines der Auswahlfelder angewählt werden. Die Auswahl eines Auswahlfeldes kann insbesondere durch die Betätigung einer Eingabetaste abgeschlossen werden, jedoch ist beispielsweise auch eine automatische Auswahl eines angewählten Auswahlfeldes nach Ablauf einer vorgegebenen Zeitspanne ohne zusätzlichen Bedienschritt möglich. Bei dem in Figur 2 dargestellten Beispiel ist das Auswahlfeld 12 zum Aufruf des Untermenüs für die Fahrzeugnavigation ausgewählt.

Nach Auswahl eines Auswahlfeldes wird ein Animationsvorgang gestartet, bei dem von der Steuereinheit 1 eine ausreichende Abfolge von Bilddarstellungen an die Anzeigevorrichtung 5 übermittelt wird, so dass der Eindruck einer kontinuierlichen Bewegung entsteht. Die entsprechenden Bildinformationen können dabei bereits permanent in einem Speicherelement abgelegt sein, wodurch eine vergleichsweise geringe Rechenleistung der Steuereinheit 1 ausreichend ist. Die entsprechenden Ansteuersignale zur Erzeugung der Bildsequenz können bei größerer Rechenleistung aber auch während der laufenden Animation mittels eines entsprechenden Programms berechnet werden. Die Erzeugung von Computeranimationen an sich, auf die hier zurückgegriffen wird, ist hinreichend bekannt.

Ein Ausschnitt aus einer erfindungsgemäßen Sequenz ist in den Figuren 2a bis 21 dargestellt. Im Rahmen dieser Sequenz wird die Größe des ausgewählten Auswahlfeldes 12 kontinuierlich erhöht. Die Größe der verbleibenden Auswahlfelder 13 bis 20 bzw. die Größe und relative Anordnung der in den verbleibenden Auswahlfeldern 13 bis 20 dargestellten Symbole und Schriftzeichen wird dagegen unverändert beibehalten. Die Animation erfolgt nun derart, dass die Anordnung der Auswahlfelder untereinander beibehalten wird, aufgrund der Vergrößerung des Auswahlfeldes 12 jedoch der Effekt der Verdrängung der restlichen Auswahlfelder 13 bis 20 aus dem Darstellungsbereich der Anzeigevorrichtung erfolgt. Bei diesem Vorgang bleibt die Größe der Auswahlfelder 13 bis 20 erhalten, jedoch ändert sich ihre Position, sodass einige oder alle der Auswahlfelder 13 bis 20 während der Animation ganz oder teilweise aus dem Darstellungsbereich verschwinden.

Durch die Änderung der Position der Auswahlfelder 13 bis 20 wird eine Überlappung des sich vergrößernden Auswahlfeldes 12 mit diesen Auswahlfeldern vermieden. In dem durch die Vergrößerung des Auswahlfeldes 12 geschaffenen Darstellungsraum werden ebenfalls in einer Animation neue Auswahlfelder 28 bis 32 geschaffen, die das Untermenü des ausgewählten Auswahlfeldes 12 repräsentieren. Im dargestellten Ausführungsbeispiel wird durch die Animation der Effekt des Einlaufens der neuen Auswahlfelder 28 bis 32 von der linken Seiten des Bildschirms her erzeugt. Auch die Kennzeichnung der neuen Auswahlfelder 28 bis 32 wird durch eine Animation erzeugt. Hierbei wird die Helligkeit der alphanumerischen Kennzeichnung der Auswahlfelder 28 bis 32 während der Animation kontinuierlich erhöht, so dass auch hierdurch beim Betrachter der Eindruck eines kontinuierlichen Aufbaus entsteht. Anstelle einer alphanumerischen Kennzeichnung der Auswahlfelder 28 bis 32 können diese auch durch entsprechende Symbole (Icons) gekennzeichnet sein.

Wie weiterhin aus der Sequenz gemäß Figur 2 ersichtlich ist, ändert sich auch die Ansicht der Symbole 21 bis 27. Dies wird insbesondere durch eine langsame Rotation der Symbole 21 bis 27 während der gesamten Animationsphase erreicht. Hierdurch wird der Eindruck einer Bewegung für den Betrachter noch verstärkt.

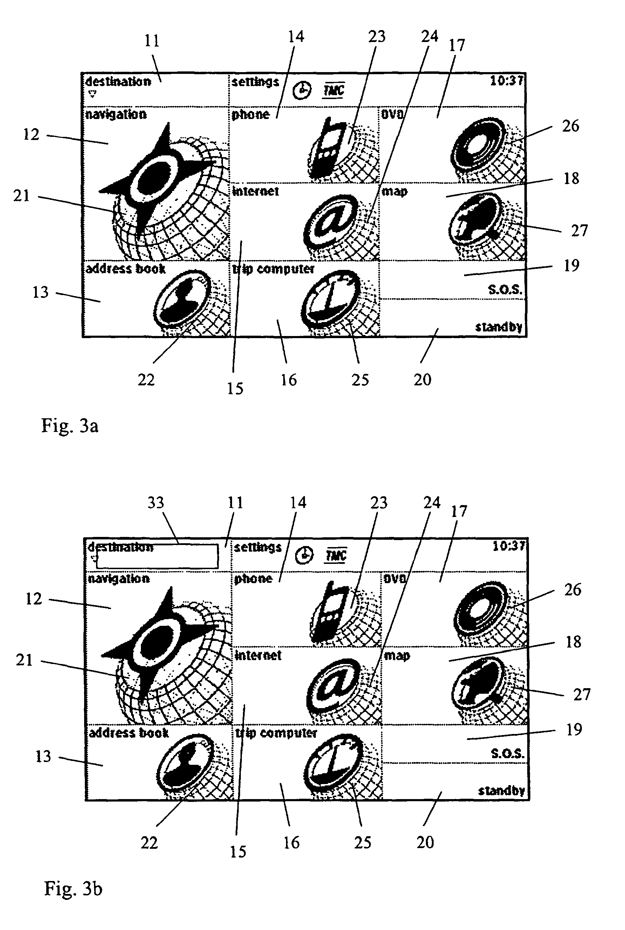

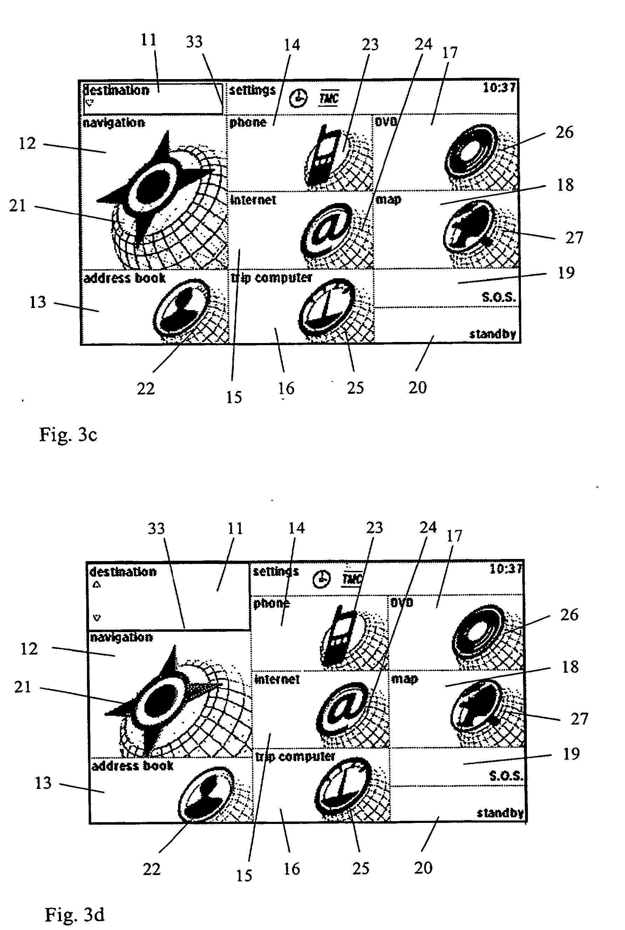

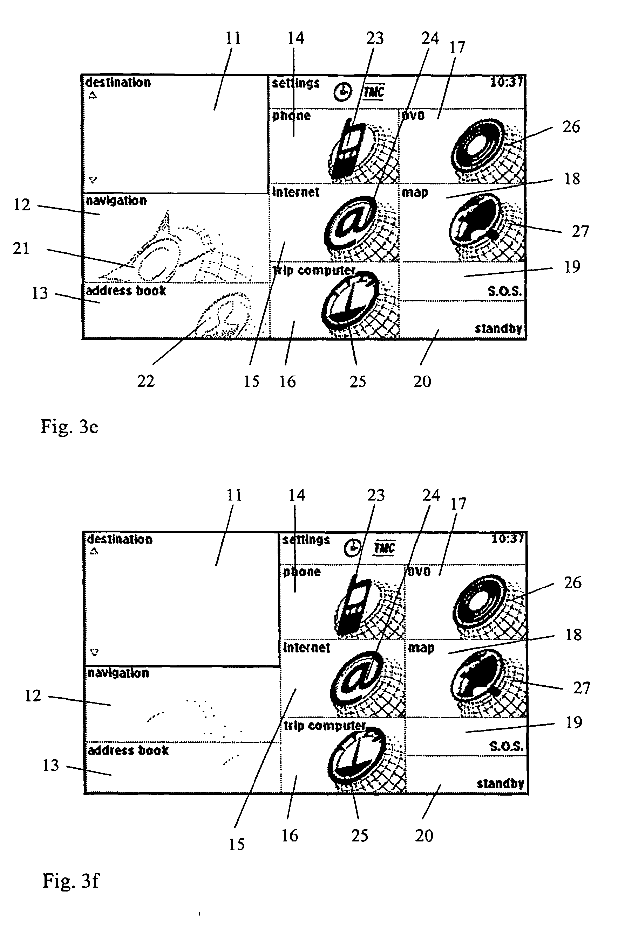

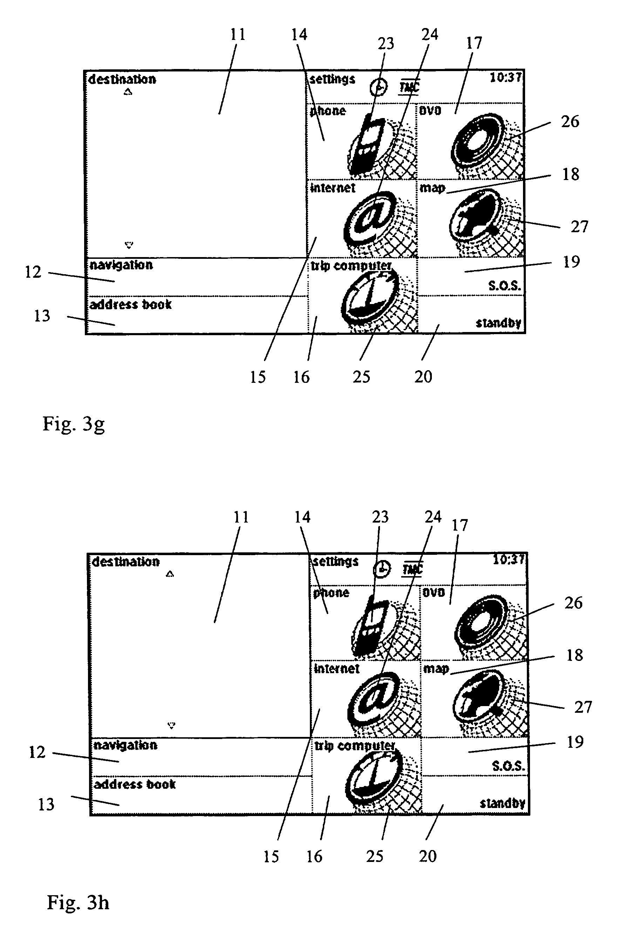

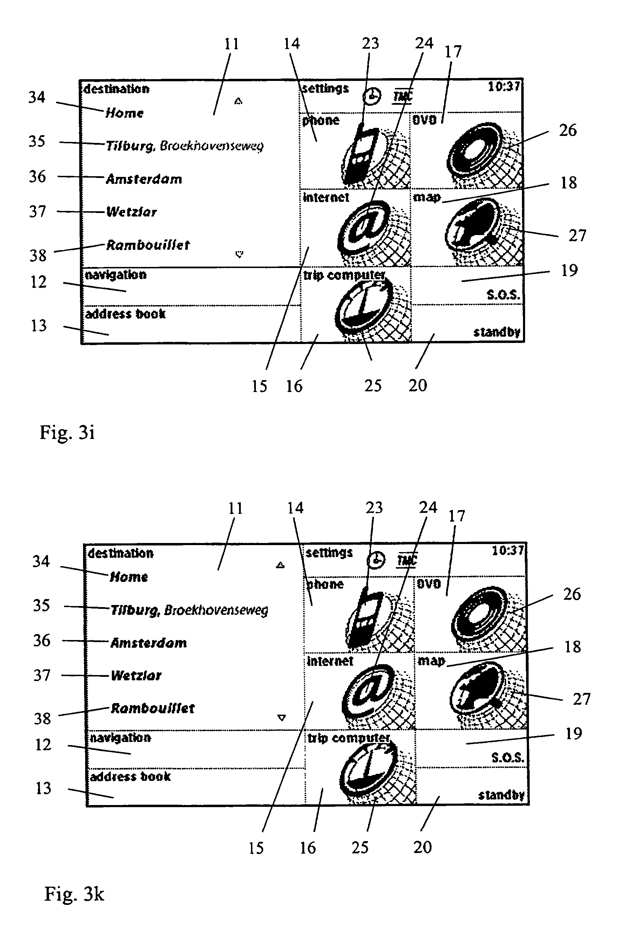

Ein zweites Ausführungsbeispiel der Erfindung ist als Bildsequenz in Fig. 3 dargestellt. Die Ausgangsdarstellung gemäß Figur 3a stimmt weitgehend mit der Ausgangsdarstellung gemäß Figur 2a überein. In Figur 3a ist jedoch noch nicht ersichtlich, welches der Auswahlfelder 11 - 20 ausgewählt wurde. Ein entsprechender Rahmen 33 des Auswahlfeldes 11, der eine vorgenommene Auswahl verdeutlicht, wird erst durch eine in Fig. 3b angedeutete Animation erzeugt und führt schließlich zur Bildschirmdarstellung 3c. Der Rahmen 33 kann dabei beispielsweise ausgehend von einem Punkt in der Bildmitte des Auswahlfeldes 11 erzeugt werden, wobei durch die Animation der Bildpunkt in ein sich vergrößerndes Rechteck übergeht, welches das Auswahlfeld 11 umschließt.

Wie bereits erwähnt, ist bei dem Ausführungsbeispiel gemäß Figur 3 das Auswahlfeld 11, das die Auswahl eines Zielortes gestattet, ausgewählt. Wie aus der Bildsequenz gemäß Figur 3 ersichtlich ist, wird nun wie bereits oben in Zusammenhang mit Figur 2 für das Auswahlfeld 12 beschrieben, zunächst das Auswahlfeld 11 vergrößert. Diese Vergrößerung des Auswahlfeldes 11 geschieht auf Kosten der Größe der verbleibenden Auswahlfelder 12 bis 20. Bei dem in Figur 3 dargestellten Ausführungsbeispiel wird nunmehr neben der Position der Auswahlfelder 12 bis 20 auch deren Größe verändert. In dem vergrößerten Auswahlfeld 11 wird schließlich in einer Animation die Darstellung der Auswahlfelder 34 bis 38 zur Ortsauswahl generiert (vgl. Fig. 3i und 3k). Wie in Zusammenhang mit dem vorhergehenden Beispiel beschrieben, erfolgt die Animation dabei derart, dass die Helligkeit der angezeigten Informationen, in diesem Falle der Ortsnamen, kontinuierlich erhöht wird. Die Ortsnamen stellen somit weitere Auswahlfelder 34 bis 38 dar.

Dieses zweite Ausführungsbeispiel weist eine weitere Besonderheit auf, nämlich das Ausblenden des Symbols 21 für die Fahrzeugnavigation (vgl. Fig. 3d bis 3g). Um ausreichend Platz für die Darstellung der Ortsnamen im linken Bildschirmbereich zu generieren, ist es erforderlich das Navigationsauswahlfeld 12 entsprechend stark zu verkleinern. Da dies gleichzeitig eine starke Verkleinerung des zugehörigen Symbols 21 zur Folge hat, wird das Symbol 21 während der Navigation ausgeblendet. Dieses Ausblenden erfolgt durch eine kontinuierliche Abnahme der Helligkeit des Symbols 21, bis dieses vor dem Hintergrund des Bildschirmes nicht mehr sichtbar ist. Bei einer farbigen Bildschirmdarstellung kann dieses Ausblenden des Symbols 21 auch derart erfolgen, dass die Farbe des Symbols 21 an die Farbe des Bildschirmhintergrundes in diesem Bereich angepasst wird, so dass sich das Symbol von dem Hintergrund nicht mehr abhebt.

Der Vorteil der Ausführungsform gemäß Fig. 3 besteht darin, dass zu jeder Zeit auch die nicht ausgewählten Auswahlfelder 12 bis 20 für eine Neuauswahl zur Verfügung stehen. Hierdurch ist ein Sprung in ein übergeordnetes Hauptmenü nicht erforderlich, wodurch die Bedienung stark vereinfacht wird.

In den Ausführungsbeispielen sind die Auswahlfelder stets durch Nebeneinander angeordnete rechteckige Kästchen begrenzt. Andere Ausgestaltungen der Anzeigefelder, wie beispielsweise eine 5- oder 6-eckige Form können ebenfalls realisiert werden. Weiterhin kann das Auswahlfeld durch ein, das jeweilige Symbol umgebendes, beliebiges geometrisches Feld gekennzeichnet sein, ohne das dessen Grenzen für den Betrachter im Detail ersichtlich sein müssen. Eine solche Ausführungsform liefert den gleichen Komfort hinsichtlich der Bedienbarkeit, da die Auswahl eines Auswahlfeldes in der Regel über Navigationstasten erfolgt, die bei Betätigung ein Springen zwischen den Auswahlfeldem automatisch hervorrufen. Ein an- oder ausgewähltes Auswahlfeld kann dabei beispielsweise auch durch eine Farbänderung des zugehörigen Symbols kenntlich gemacht werden.

## Patentansprüche

1. Kraftfahrzeug-Multimediasystem mit
- mehreren Modulen, insbesondere ausgewählt aus einem Navigationsmodul, einem Kartenanzeigemodul, einem Telefonmodul, einem Radiomodul, einem CD-Abspielmodul, einem DVD-Abspielmodul, einem Kassettenabspielmodul und einem Internetmodul,
- einer von einer Steuereinheit (1) angesteuerten Anzeigevorrichtung (5),
- einer Auswahlvorrichtung (4) für auf der Anzeigevorrichtung (5) dargestellte erste Auswahlfelder (11-20), wobei über die Auswahl eines Auswahlfeldes mittels der Auswahlvorrichtung ein mit dem ausgewählten Auswahlfeld verknüpftes Untermenü aufgerufen wird, **dadurch gekennzeichnet, dass** die Auswahlfelder durch nebeneinander angeordnete recht- oder mehreckige Kästchen begrenzt sind und durch ein Betätigen der Auswahlvorrichtung (4) ein Sprung zwischen den Auswahlfeldern (11-20) hervorrufbar ist und nach Auswahl eines Auswahlfeldes die Ansteuerung der Anzeigevorrichtung (5) durch die Steuereinheit (1) in Form einer auf der Anzeigeeinheit (5) ablaufenden Animation erfolgt, wobei
a) auf der Anzeigeeinheit (5) Darstellungsraum für die Darstellung von weiteren Auswahlfeldern (28-32) für ein Untermenü des ausgewählten Auswahlfelder geschaffen wird
b) die Schaffung des Darstellungsraurns unter Beibehaltung der Anordnung der ersten Auswahlfelder (11-20) untereinander erfolgt,
c) die Größe und oder Position zumindest einiger der angezeigten ersten Auswahlfelder (11-20) derart verändert wird, dass der Eindruck einer kontinuierlichen Bewegung entsteht und
d) die Auswahlfelder des Untermenüs in einer Animation auf der Anzeigevorrichtung (5) erzeugt werden.

2. Multimediasystem nach Anspruch 1, **dadurch gekennzeichnet, dass** die Animation derart erfolgt, dass die nicht ausgewählten ersten Auswahlfelder durch das ausgewählte Auswahlfeld aus einem Darstellungsbereich der Anzeigevorrichtung verdrängt werden.

3. Multimediasystem nach Anspruch 2, **dadurch gekennzeichnet, dass** das ausgewählte Auswahlfeld in einer ersten Phase der Animation zunächst vergrößert wird, um die nicht ausgewählten Auswahlfelder aus dem Darstellungsbereich der Anzeigevorrichtung zu verdrängen, und in einer zweiten Phase der Animation verkleinert wird, um den Darstellungsraum für die Darstellung der Auswahlfelder (28-32) des Untermenus zu schaffen.

4. Multimediasystem nach Anspruch 1 , **dadurch gekennzeichnet, dass** die Animation derart erfolgt, dass die Größe der nicht ausgewählten ersten Auswahlfelder verringert wird, wobei die nicht ausgewählten ersten Auswahlfelder jedoch weiterhin über die Auswahlvorrichtung (4) auswählbar bleiben.

5. Multimediasystem nach einem der vorhergehenden Ansprüche, **dadurch gekennzeichnet, dass** die Auswahlfelder (11-20) Symbole (21-27) in 3D-Darstellung zur Kennzeichnung der Auswahlfelder enthalten.

6. Multimediasystem nach Anspruch 5, **dadurch gekennzeichnet, dass** die 3D-Symbole (21-27) durch die Animation in eine Drehbewegung versetzt sind.

7. Multimediasystem nach Anspruch 5 oder 6, **dadurch gekennzeichnet, dass** das Symbol (21-27) eines oder mehrerer Auswahlfelder (11-20) durch die Animation ausgeblendet wird.

8. Multimediasystem nach einem der vorhergehenden Ansprüche, **dadurch gekennzeichnet, dass** durch die Animation eine kontinuierliche Farbänderung zumindest eines Auswahlfeldes (11-20) erfolgt.

9. Multimediasystem nach einem der vorhergehenden Ansprüche, **dadurch gekennzeichnet, dass** die Auswahlvorrichtung (4) in die Anzeigevorrichtung (5) integriert ist.

10. Multimediasystem nach Anspruch 9, **dadurch gekennzeichnet, dass** es sich bei der Anzeigevorrichtung (5) um einen berührungsempfindlichen Bildschirm handelt.

11. Multimediasystem nach einem der vorhergehenden Ansprüche, **dadurch gekennzeichnet, dass** es sich um ein Multimediasystem zum nachträglichen Einbau in ein Kraftfahrzeug handelt.

12. Multimediasystem nach einem der vorhergehenden Ansprüche, **dadurch gekennzeichnet, dass** es Bestandteil eines Kraftfahrzeug-Bordcomputers ist.

13. Verfahren zur Anordnung von Auswahlfeldern auf einer Anzeigevorrichtung eines Kraftfahrzeug-Multimediasystems, das mehrere Module, insbesondere ausgewählt aus einem Navigationsmodul, einem Kartenanzeigemodul, einem Telefonmodul, einem Radiomodul, einem CD-Abspielmodul, einem DVD-Abspielmodul, einem Kassettenabspielmodul und einem Internetmodul enthält, wobei
- mehrere Auswahlfelder zur Auswahl angezeigt werden,
- die Auswahlfelder durch nebeneinander angeordnete recht- oder mehreckige Kästchen begrenzt sind,
- durch Betätigen einer Auswahlvorrichtung ein Sprung zu einem auszuwählenden Auswahlfeld erfolgt,
- nach Auswahl eines der angezeigten Auswahlfelder zu den einzelnen Auswahlfeldern eine Animationsphase gestartet wird und während der Animationsphase
- Darstellungsraum für die Darstellung von weiteren Auswahlfeldem für ein Untermenü des ausgewählten Auswahlfeldes geschaffen wird,
- die Größe und/oder Position zumindest einiger der angezeigten Auswahlfelder derart verändert wird, dass der Eindruck einer kontinuierlichen Bewegung entsteht, wobei
- die Anordnung der ersten Auswahlfelder (11.20) untereinander beibehalten wird, und
- die Auswahlfelder des Untermenüs in einer Animation auf der Anzeigevorrichtung erzeugt werden.

14. Verfahren nach Anspruch 13, **dadurch gekennzeichnet, dass** in den Auswahlfeldern Symbole in 3D-Darstellung zur Kennzeichnung der Auswahlfelder angeordnet werden.

15. Verfahren nach Anspruch 14, **dadurch gekennzeichnet, dass** die 3D-Symbole während der Animationsphase in eine Drehbewegung versetzt werden.

16. Verfahren nach einem der vorhergehenden Ansprüche, **dadurch gekennzeichnet, dass** die nicht ausgewählten ersten Auswahlfelder während der Animationsphase kontinuierlich durch das ausgewählte Auswahlfeld aus dem Darstellungsbereich der Anzeigevorrichtung geschoben werden.

17. Verfahren nach Anspruch 16, **dadurch gekennzeichnet, dass** das ausgewählte Auswahlfeld in einer ersten Phase der Animation zunächst vergrößert wird, um die nicht ausgewählten Auswahlfelder aus dem Darstellungsbereich des Bildschirms zu schieben, und in einer zweiten Phase der Animation verkleinert wird, um den Darstellungsraum für die Darstellung der Auswahlfelder des Untermenus zu schaffen.

18. Verfahren nach einem der vorhergehenden Ansprüche, **dadurch gekennzeichnet, dass** die nicht ausgewählten Auswahlfelder während der Animationsphase kontinuierlich eine geringere Größe erhalten, jedoch auch nach Abschluss der Animationsphase auswählbar bleiben.

19. Verfahren nach einem der vorhergehenden Ansprüche, **dadurch gekennzeichnet, dass** das Symbol zur Kennzeichnung des ausgewählten Auswahlfeldes während der Animationsphase kontinuierlich ausgeblendet wird.

20. Verfahren nach einem der vorhergehenden Ansprüche, **dadurch gekennzeichnet, dass** während der Animationsphase eine kontinuierliche Farbänderung zumindest eines Auswahlfeldes erfolgt.

## Claims

1. Motor vehicle multimedia system, having
- a plurality of modules, selected in particular from a navigation module, a map display module, a telephone module, a radio module, a CD player module, a DVD player module, a cassette player module and an Internet module,
- a display apparatus (5) which is driven by a control unit (1),
- a selection apparatus (4) for first selection areas (11-20), which are displayed on the display apparatus (5), with a submenu which is linked to the selected selection area being called up by selection of a selection area by means of the selection apparatus, **characterized in that** the selection areas are bounded by small rectangular or polygonal boxes which are arranged alongside one another and a jump between the selection areas (11-20) can be called up by operation of the selection apparatus (4) and after selection of a selection area, the display apparatus (5) is driven by the control unit (1) in the form of an animation which runs on the display unit (5), with
(a) display area being created on the display unit (5) for displaying further selection areas (28-32) for a submenu of the selected selection area,
(b) the display area being created while maintaining the arrangement of the first selection areas (11-20) with respect to one another,
(c) the size and/or position of at least some of the displayed first selection areas (11-20) being varied so as to give the impression of continuous movement, and
(d) the selection areas of the submenu being produced in an animation of the display apparatus (5).

2. Multimedia system according to claim 1, wherein the animation is produced in such a way that those first selection areas which have not been chosen are moved out of a display area of the display apparatus by the chosen selection area.

3. Multimedia system according to claim 2, wherein, in a first phase of the animation, the chosen selection area is firstly enlarged in order to move those selection areas which have not been chosen out of the display area of the display apparatus and, in a second phase, the animation is reduced in size in order to provide the display area for displaying the selection areas (28-32) of the submenu.

4. Multimedia system according to claim 1, wherein the animation is produced in such a way that the size of those first selection areas which have not been chosen is reduced in size, although those first selection areas which have not been chosen can still be selected via the selection apparatus (4).

5. Multimedia system according to one of the preceding claims, wherein the selection areas (11-20) contain symbols (21-27) in a 3D display to identify the selection areas.

6. Multimedia system according to claim 5, wherein the animation causes the 3D symbols (21-27) to rotate.

7. Multimedia system according to claim 5 or 6, wherein the symbol (21-27) for one or more selection areas (11-20) is masked out by the animation.

8. Multimedia system according to one of the preceding claims, wherein the animation causes the color of at least one selection area (11-20) to vary continuously.

9. Multimedia system according to one of the preceding claims, wherein the selection apparatus (4) is integrated in the display apparatus (5).

10. Multimedia system according to claim 9, wherein the display apparatus (5) is a touch-sensitive screen.

11. Multimedia system according to one of the preceding claims, wherein said multimedia system can be fitted in a motor vehicle retrospectively.

12. Multimedia system according to one of the preceding claims, wherein said multimedia system is part of a motor vehicle on-board computer.

13. Method for arrangement of selection areas on a display apparatus in a motor vehicle multimedia system which contains a plurality of modules, in particular selected from a navigation module, a map display module, a telephone module, a radio module, a CD player module, a DVD player module, a cassette player module and an Internet module, with
- a plurality of selection areas being displayed for selection,
- the selection areas being bounded by small rectangular or polygonal boxes which are arranged alongside one another,
- a jump being made to a selection area to be selected by operation of a selection apparatus,
- an animation phase being started for the individual selection areas after selection of one of the displayed selection areas, and, during the animation phase
- display area being created for the display of further selection areas for a submenu of the selected selection area,
- the size and/or position of at least some of the displayed selection areas being varied so as to give the impression of continuous movement, with
- the arrangement of the first display areas (11-20) with respect to one another being maintained, and
- the selection areas of the submenu being produced in an animation on the display apparatus.

14. Method according to claim 13, wherein, in the selection areas, symbols are arranged in a 3D display in order to identify the selection areas.

15. Method according to claim 14, wherein the 3D symbols are caused to rotate during the animation phase.

16. Method according to one of the preceding claims, wherein those first selection areas which have not been chosen are continuously moved out of the display area of the display apparatus by the chosen selection area during the animation phase.

17. Method according to claim 16, wherein, in a first phase of the animation, the chosen selection area is firstly enlarged in order to move those selection areas which have not been chosen out of the display area of the screen and, in a second phase, the animation is reduced in size in order to provide the display area for displaying the selection areas of the submenu.

18. Method according to one of the preceding claims, wherein, during the animation phase, those selection areas which have not been chosen are continuously made smaller in size, but can still be selected even after completion of the animation phase.

19. Method according to one of the preceding claims, wherein the symbol for identifying the chosen selection area is continuously masked out during the animation phase.

20. Method according to one of the preceding claims, wherein the color of at least one selection area is varied continuously during the animation phase.

## Revendications

1. Système multimédia pour véhicule automobile comportant
- plusieurs modules sélectionnés, notamment, parmi un module de navigation, un module d'affichage de cartes, un module de téléphonie, un module de radiodiffusion, un module lecteur de cédéroms, un module de lecteur de DVDs, un module lecteur de cassettes et un module Internet,
- un dispositif d'affichage (5) commandé par une unité de contrôle (1),
- un dispositif de sélection (4) permettant de sélectionner des premiers champs de sélection (11-20) représentés sur le dispositif d'affichage (5), un sous-menu couplé avec le champ de sélection sélectionné étant appelé par sélection d'un champ de sélection au moyen du dispositif de sélection,
**caractérisé par le fait que** les champs de sélection sont limités par des cases rectangulaires ou polygonales disposées les unes à côté des autres et que, par un actionnement du dispositif de sélection (4), on peut provoquer un saut d'un champ de sélection (11-20) à un autre et que, après la sélection d'un champ de sélection, la commande du dispositif d'affichage (5) par l'unité de contrôle (1) se fait sous la forme d'une animation se déroulant sur l'unité d'affichage (5), alors que
a) de la place est libérée sur l'unité d'affichage (5) pour la représentation de champs de sélection supplémentaires (28-32) pour un sous-menu du champ de sélection sélectionné,
b) la libération de la place de représentation se fait tout en conservant la disposition des premiers champs de sélection (11-20) les uns par rapport aux autres,
c) la grandeur et / ou la position au moins de quelques-uns des premiers champs de sélection (11-20) affichés sont modifiées de manière telle qu'on a l'impression d'un mouvement continu et
d) les champs de sélection du sous-menu sont générés dans une animation sur le dispositif d'affichage (5).

2. Système multimédia selon la revendication 1, **caractérisé par le fait que** l'animation se déroule de manière telle que les premiers champs de sélection non sélectionnés sont repoussés hors d'une surface de représentation du dispositif d'affichage par le champ de sélection sélectionné.

3. Système multimédia selon la revendication 2, **caractérisé par le fait que**, au cours d'une première phase de l'animation, le champ de sélection sélectionné est d'abord agrandi, pour repousser les champs de sélection non sélectionnés hors de la surface de représentation du dispositif d'affichage, et, au cours d'une deuxième phase de l'animation, il est rapetissé pour créer une surface de représentation pour la représentation des champs de sélection (28-32) du sous-menu.

4. Système multimédia selon la revendication 1, **caractérisé par le fait que** l'animation se déroule de telle manière que le format des premiers champs de sélection non sélectionnés est diminué, alors que les premiers champs de sélection non sélectionnés continuent toutefois à pouvoir être sélectionnés par l'intermédiaire du dispositif de sélection (4).

5. Système multimédia selon l'une des revendications précédentes, **caractérisé par le fait que** les champs de sélection (11-20) renferment, pour l'identification des champs de sélection, des symboles (21-27) représentés en trois dimensions.

6. Système multimédia selon la revendication 5, **caractérisé par le fait que** les symboles (21-27) en trois dimensions sont soumis par l'animation à un mouvement de rotation.

7. Système multimédia selon la revendication 5 ou 6, **caractérisé par le fait que** le symbole (21-27) de l'un ou de plusieurs des champs de sélection (11-20) est supprimé par l'animation.

8. Système multimédia selon l'une des revendications précédentes, **caractérisé par le fait que**, grâce à l'animation, il se produit une modification continue de couleur d'au moins un champ de sélection (11-20).

9. Système multimédia selon l'une des revendications précédentes, **caractérisé par le fait que** le dispositif de sélection (4) est intégré dans le dispositif d'affichage (5).

10. Système multimédia selon la revendication 9, **caractérisé par le fait que** le dispositif d'affichage (5) est un écran tactile.

11. Système multimédia selon l'une des revendications précédentes, **caractérisé par le fait qu'**il s'agit d'un système multimédia destiné à être installé comme extension dans un véhicule automobile.

12. Système multimédia selon l'une des revendications précédentes, **caractérisé par le fait qu'**il fait partie intégrante d'un ordinateur de bord de véhicule automobile.

13. Procédé permettant d'ordonner des champs de sélection sur un dispositif d'affichage d'un système multimédia pour véhicule automobile, qui renferme plusieurs modules sélectionnés, notamment, parmi un module de navigation, un module d'affichage de cartes, un module de téléphonie, un module de radiodiffusion, un module lecteur de cédéroms, un module de lecteur de DVDs, un module lecteur de cassettes et un module Internet,
- plusieurs champs de sélection étant affichés en vue de leur sélection,
- les champs de sélection étant limités par des cases rectangulaires ou polygonales disposées les unes à côté des autres,
- un actionnement d'un dispositif de sélection provoquant un saut vers un champ de sélection à sélectionner,
- une phase d'animation étant lancée, après sélection de l'un des champs de sélection parmi les différents champs de sélection affichés, et, pendant la phase d'animation,
- de la place étant libérée pour la représentation de champs de sélection supplémentaires faisant partie d'un sous-menu du champ de sélection sélectionné,
- la grandeur et / ou la position d'au moins quelques-uns des champs de sélection affichés étant modifiées de manière telle qu'on a l'impression d'un mouvement continu, alors que
- la disposition des premiers champs de sélection (11-20) les uns par rapport aux autres est conservée et
- les champs de sélection du sous-menu sont générés dans une animation sur le dispositif d'affichage.

14. Procédé selon la revendication 13, **caractérisé par le fait que**, dans les champs de sélection, sont disposés des symboles représentés en trois dimensions pour identifier les champs de sélection.

15. Procédé selon la revendication 14, **caractérisé par le fait que** les symboles en trois dimensions sont soumis par l'animation à un mouvement de rotation.

16. Procédé selon l'une des revendications précédentes, **caractérisé par le fait que** les premiers champs de sélection non sélectionnés sont repoussés d'une façon continue, pendant la phase d'animation, hors de la surface de représentation du dispositif d'affichage par le champ de sélection sélectionné.

17. Procédé selon la revendication 16, **caractérisé par le fait que** le champ de sélection sélectionné est d'abord, pendant une première phase de l'animation, agrandi, pour faire glisser les champs de sélection non sélectionnés hors de la surface de représentation de l'écran et, dans une deuxième phase de l'animation, rapetissé, pour créer de la surface de représentation pour la représentation des champs de sélection du sous-menu.

18. Procédé selon l'une des revendications précédentes, **caractérisé par le fait que** les champs de sélection non sélectionnés conservent, pendant la phase d'animation, continuellement un format réduit, mais continuent, même après la fin de la phase d'animation, à pouvoir être sélectionnés.

19. Procédé selon l'une des revendications précédentes, **caractérisé par le fait que** le symbole destiné à identifier le champ de sélection sélectionné s'efface d'une façon continue pendant la phase d'animation.

20. Procédé selon l'une des revendications précédentes, **caractérisé par le fait que**, pendant la phase d'animation, il se produit un changement de couleur continu d'au moins un champ de sélection.
